# EUROPEAN PATENT APPLICATION

(11) **EP 1 376 811 A2**
(43) Date of publication of application: **02.01.2004**
(21) Application number: 03466011.8
(22) Date of filing: 22.05.2003
(51) Int. Cl.: H02H 9/06

(54) **Overvoltage protection circuit**

(30) Priority: 22.05.2002 CZ 20021769
(71) Applicant: KIWA spol.s r.o., 949 01 Nitra (SK)
(72) Inventor: Valent, Ferdinand, 82101 Bratislava (SK); Jurcacko, Ludovit, 83106 Bratislava (SK)
(74) Representative: Musil, Dobroslav, Dipl.-Ing.

(57) **Abstract**

The invention relates to an overvoltage protection circuit comprising at least one varistor (V) connected between working conductors (L, N) and a protective device of lightning arrester character connected between the working conductors (L, N) and a ground wire (PE) which comprises a couple of series-connected lightning arresters (G1, G2) and a varistor (V3) parallel-connected to one of said lightning arresters (G1 or G2). The value of the statical ignition (switching) voltage of each of the lightning arresters (G1, G2) is inferior to the value required for the reaching of the required value of the protective level of the circuit level while the sum of the values of the statical ignition (switching) voltage of the two lightning arresters (G1, G2) is equal or superior to the value required for the reaching of the required value of the protective level of the circuit level.

## Description

### Technical field

The invention relates to an overvoltage protection circuit comprising at least one varistor connected between working conductors L, N and a protective device of lightning arrester character connected between the working conductors L, N and a ground wire PE.

### Background art

The development of the overvoltage protection means has been reflected also in the drafting of technical standards (IEC 61643-1) where for the overvoltage protection in the category III there is required the defining of the maximum admissible stress U_{oc} for the protection level related to the mains in question. The quantity U_{oc} has a prescribed test procedure system which includes a steep increase in test voltage (in 1.2 µs) to the voltage maximum value and a high amplitude of the current wave 8/20. The quantity U_{oc} is a characteristic value defining the resistance degree of the overvoltage protection in a broad range of possible overvoltage phenomena and their parameters while maintaining the value of the protection level which is the maximum voltage that can appear on the clamps (or banana jacks) of the overvoltage protection.

There exists a number of circuits for the overvoltage protection in the category III as defined by the IEC 61 643-1 which comprise as a rule at least one varistor connected between the working conductors L-N and a lightning arrester connected between the conductors N-PE, described for instance in the CZ PA 1999-898 and in DE 38 40 198 A1. If the circuit is symmetrical, as a rule two varistors are connected between the working conductors, and the middle part between them is via a lightning arrester connected to a ground wire (PE). This arrangement of the functional elements is disclosed in the known solutions described in the DE G 94 14 357.9, DE 35 39 421 A1, DE 36 06 287 A1, DE 195 23 292 C1, and CZ PA 2002-877.

Besides the above mentioned ones, there exists a number of other circuits whose common feature consists in that the connection to the ground wire is effected via a lightning arrester or via a varistor. The connection via a varistor requires the provision of a disconnecting device for the varistor, and the current passing through the varistor involves problems with the evaluation of the insulation conditions between the working conductors and the ground wire. Under certain circumstances, an unwanted self-induced start of the current protector can occur. The drawbacks resulting from the connection of the varistor as a protective element between the working conductor and the ground wire have reduced the application of this connection to isolated cases.

In the circuits using the lightning arrester between the working conductors and the ground wire the chief drawback consists in the well-known property of the lightning arresters, namely that the increasing rate of rise of the voltage results in increasing ignition voltage (starting voltage) of the lightning arrester. This property substantially limits the obtainable value of the quantity U_{oc} while maintaining the value of the protective level, and thus considerably limits also the service properties of the overvoltage protection.

The invention intends to remove or at least to minimize the drawbacks of the background art.

### Principle of the invention

The aim of the invention has been reached by an overvoltage protection circuit whose principle consists in that the protective device of lighting arrester character comprises a couple of series-connected lightning arresters and a varistor parallel-connected to one of said lightning arresters, and that the value of the statical ignition (switching) voltage of each of the lightning arresters is inferior to the value required for the reaching of the required value of the protective level of the circuit level while the sum of the values of the statical ignition (switching) voltage of the two lightning arresters is equal or superior to the value required for the reaching of the required value of the protective level of the circuit level.

Due to its suitable combination of the protective elements, the circuit obtains high values of the quantity U_{oc}, substantially superior to those obtainable by the circuits of the state of art, while at the same time providing for reliable maintaining of the value of the overvoltage protection level.

In one specific embodiment of the overvoltage protection circuit, one outlet of the protective device of lightning arrester character is by means of an electrically conducting heat resistant wire connected with a heat responsive disconnecting device for the couple of the varistors series-connected between a couple of access points.

In another specific embodiment of the overvoltage protection circuit, the protective device of lightning arrester character is connected between a neutral working conductor and a ground wire while a varistor is connected between a phase conductor and a neutral working conductor and while a heat responsive disconnecting device for the varistor is connected in one branch of the varistor connection. In a preferred embodiment of this circuit, a reactance coil is via a resistor parallel-connected with the varistor between the phase working conductor and the neutral working conductor.

Each of these two specific embodiments of the overvoltage protection device is reliable and simple.

At least one signal light is provided for monitoring the correct function of the circuit.

### Description of the drawings

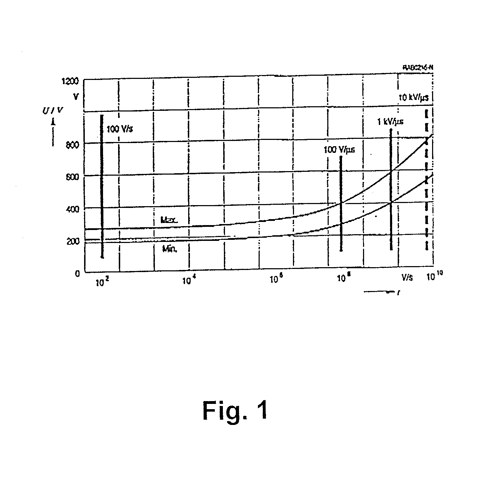

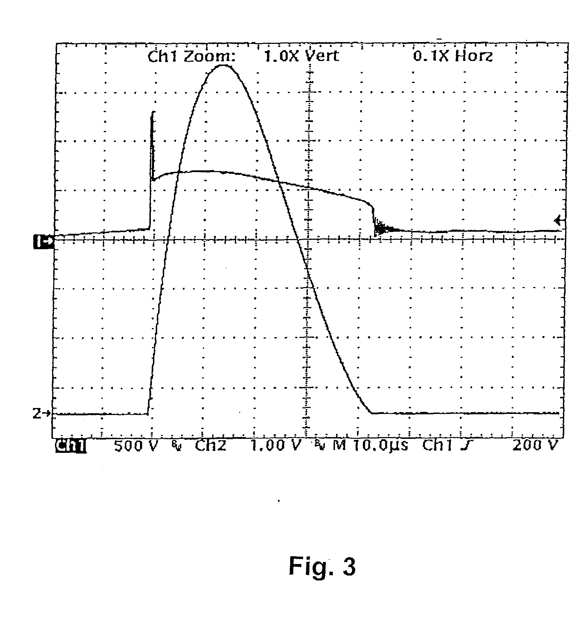

The invention is schematically shown in the drawings in which Fig. 1 shows a typical ignition characteristic of the lightning arrester, Fig. 2a a first example of embodiment of the circuit according to the invention, Fig. 2b a second example of embodiment of the circuit according to the invention, and Fig. 3 a typical course of the voltage and current between the working conductors L, N and the ground wire PE in the circuit according to the invention.

### Examples of embodiment

The overvoltage protection circuit comprises at least one varistor **V** connected between working conductors **L**, **N**. Between the working conductors **L**, **N** and a ground wire **PE** there is connected a protective device 2 of lightning arrester character consisting of a series-connected couple of lightning arresters **G1**, **G2**, and a varistor **V3** is parallel-connected to one of the couple of lightning arresters **G1, G2**. The value of the statical ignition (switching) voltage of each lightning arrester **G1, G2** is inferior to the value required for the reaching of the required value of the protective level of the circuit level for which the overvoltage protective device is intended while the sum of the values of the statical ignition (switching) voltage of the two lightning arresters **G1**, **G2** is equal or superior to the value required for the reaching of the required value of the protective level of the circuit level. The determination of due value of the statical ignition (switching) voltage of each lightning arrester **G1**, **G2** taken separately as well as the required value of the statical ignition (switching) voltage of the protective device **2** as a whole, i.e. the sum of the values of the statical ignition (switching) voltage of the two lightning arresters **G1**, **G2**, lies within the scope of professional knowledge of those skilled in the art if acquainted with the present solution. As compared with the background art in which a single lightning arrester connected in due section of the circuit has by itself just the required value of the statical ignition (switching) voltage, said lightning arrester is in the circuit according to the invention replaced by the protective device **2** of lightning arrester character made as a combination of series-connected couple of lightning arresters **G1, G2** and a varistor **V3** parallel-connected with one of said couple of lightning arresters **G1**, **G2**.

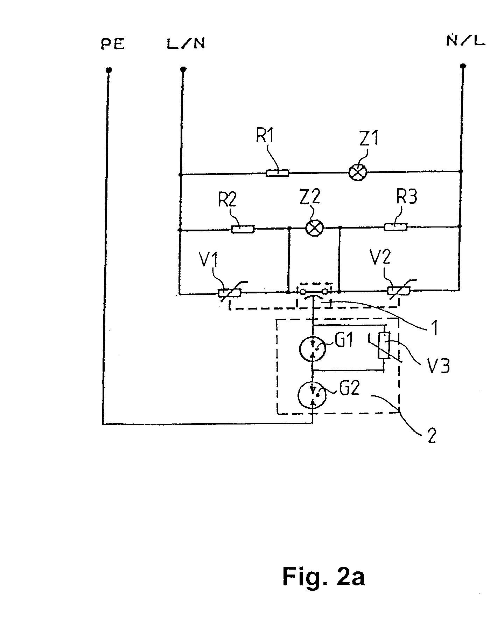

In the example of embodiment shown in Fig. 2a, the overvoltage protection circuit contains a couple of varistors **V1**, **V2**, series-connected between a couple of access points **L/N** and **N/L** of the working conductors **L, N**. Between the two varistors **V1**, **V2** a heat responsive device **1** for disconnecting the two varistors **V1**, **V2** from the protected electrical circuit is installed in the circuit. The heat responsive disconnecting device **1** is via an electrically conducting heat resisting connection coupled with one outlet of the protective device **2** of lightning arrester character whose the other outlet is connected with the ground wire **PE**. The protective device **2** of lightning arrester character contains a couple of lightning arresters **G1**, **G2** and a varistor **V3** parallel-connected with the first lightning arrester **G1.** In parallel with the series system of the couple of the varistors **V1**, **V2** and the heat responsive disconnecting device **1,** there is between the access points **L/N** and **N/L** connected a series system of a couple of resistors **R2**, **R3** between which a red signal light **Z2** is installed. The part of the electrical circuit between each of the resistors **R2**, **R3** and the red signal light **Z2** is connected with the part of the electrical circuit between each of the varistors **V1**, **V2** and the heat responsive disconnecting device **1**. In parallel with the series system of the couple of the varistors **V1**, **V2** and the heat responsive disconnecting device **1,** there is connected between the access points **L/N** and **N/L** a series system of a couple of resistors **R2**, **R3** between which the red signal light **Z2** is connected. The part of the electrical circuit between each of the resistors **R2, R3** and the red signal light **Z2** is connected with the part of the electrical circuit between each of the varistors **V1**, **V2** and the heat responsive disconnecting device **1**. In parallel with the two parallel-connected series systems of the couple of the varistors **V1**, **V2** - the heat responsive disconnecting device **1**, and the couple of the resistors **R2, R3** - red signal light **Z2** there is between the access points **L/N** and **N/L** connected a series system of a resistor **R1** and of a green signal light **Z1**.

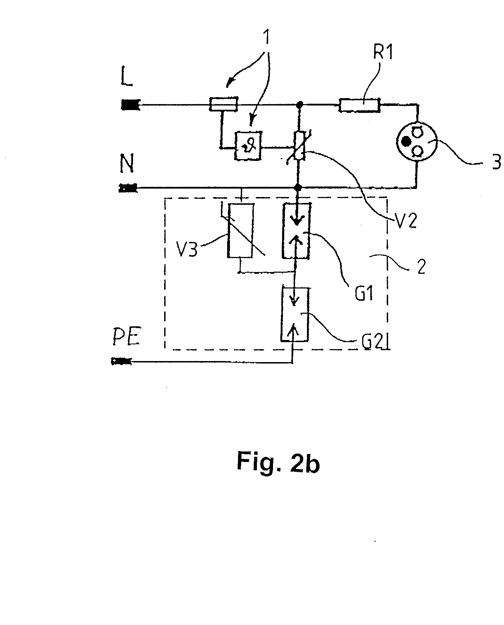

In the example of embodiment shown in Fig. 2b, the overvoltage protection circuit comprises the varistor **V2** connected between the working conductors **L** and **N** and the heat responsive disconnecting device **1** for the varistor **V2** inserted in one branch of the connection of the varistor **V2**. Between the phase working conductor **L** and the neutral working conductor **N** there is connected in parallel with the varistop **V2** via the resistor **R1** a reactance coil **3**. Between the neutral working conductor **N** and the ground wire **PE** is connected the protective device **2** of lightning arrester character which comprises a couple of lightning arresters **G1, G2** and the varistor **V3** connected in parallel with the first varistor **V3**. For signalling the correct function of the circuit, the circuit can be fitted with a suitable signal light, for instance by a well-known reactance coil.

The circuit operates as follows: If the overvoltage steeply rises to a value at which the sum of the ignition voltages of the series-connected couple of the lightning arresters **G1** and **G2** is substantially superior to the protective level, the varistor **V3** connected in parallel to the first lightning arrester **G1** begins to let pass the current at a substantially lower voltage (level) and thus starts the second lightning arrester **G2** with the ensuing sharp drop in the voltage on the second lightning arrester **G2**, and the current flows through the varistor **V3** and the second lightning arrester **G2**. The voltage on the first lightning arrester **G1** is determined by the voltage on the varistor **V3** which rises with the rising electrical current flowing through the varistor **V3**. The varistor **V3** is so chosen as to ensure that the voltage on its contacts initiates in short time the start of the first lightning arrester **G1** and thus abruptly drops the electrical current flowing through the varistor **V3**. This separate switching of the lightning arresters **G1, G2** permits to reduce substantially the maximum voltage level required for initiating the function of the current leading path between the working conductors **L**, **N** and the ground wire **PE** while maintaining the required value of the protective level.

### Industrial applicability

The circuit is applicable to the protection of electrical devices against destroying effects of overvoltage, in particular on the terminal devices of networks.

## Claims

1. Overvoltage protection circuit comprising at least one varistor connected between working conductors L, N and a protective device of lightning arrester character connected between the working conductors L, N and a ground wire PE, **characterized by** that the protective device (2) of lightning arrester character comprises a couple of series-connected lightning arresters (G1, G2) and a varistor (V3) parallel-connected to one of said lightning arresters (G1 or G2), and that the value of the statical ignition (switching) voltage of each of the lightning arresters (G1, G2) is inferior to the value required for the reaching of the required value of the protective level of the circuit level while the sum of the values of the statical ignition (switching) voltage of the two lightning arresters (G1, G2) is equal or superior to the value required for the reaching of the required value of the protective level of the circuit level.

2. Circuit as claimed in Claim 1, **characterized by** that one outlet of the protective device (2) of lightning arrester character is by means of an electrically conducting heat resistant wire connected with a heat responsive disconnecting device (1) for the couple of the varistors (V1, V2) series-connected between a couple of access points (L/N, N/L).

3. Circuit as claimed in Claim 1, **characterized by** that the protective device (2) of lightning arrester character is connected between a neutral working conductor (N) and a ground wire (PE) while a varistor (V2) is connected between a phase conductor (L) and a neutral working conductor (N) and while the heat responsive disconnecting device (1) for the varistor (V2) is connected in one branch of the connection of the varistor (V2).

4. Circuit as claimed in Claim 3, **characterized by** that a reactance coil (3) is via a resistor (R1) parallel-connected with the varistor (V2) between the phase working conductor (L) and the neutral working conductor (N).

5. Circuit as claimed in any of Claims 1 to 4, **characterized by** that it contains at least one signal light (Z1, Z2, 3).
